# EUROPÄISCHE PATENTSCHRIFT

(11) **EP 3 962 279 B1**
(45) Veröffentlichungstag und Bekanntmachung des Hinweises auf die Patenterteilung: **04.03.2026**
(21) Anmeldenummer: 20728918.2
(22) Anmeldetag: 04.05.2020
(51) Int. Cl.: A23B 4/023, A23L 13/70, A23L 29/231, A23L 33/21

(54) **ZUSAMMENSETZUNG ZUR HERSTELLUNG EINES INJEKTIONSMITTELS FÜR FLEISCH ZUR HERSTELLUNG EINER KOCHPÖKELWARE**
COMPOSITION FOR PRODUCING AN INJECTION AGENT FOR MEAT FOR PRODUCING A COOKED CURED MEAT
COMPOSITION POUR FABRIQUER UN AGENT D'INJECTION POUR DE LA VIANDE POUR PRÉPARER UN PRODUIT CUIT ET SAUMURÉ

(30) Priorität: 02.05.2019 DE 102019111311
(43) Veröffentlichungstag der Anmeldung: 09.03.2022
(73) Patentinhaber: Herbstreith & Fox GmbH & Co. KG Pektin-Fabriken, 75305 Neuenbürg (DE)
(72) Erfinder: FOX, Gerhard F., 75305 Neuenbürg (DE)
(74) Vertreter: Viering, Jentschura & Partner mbB Patent- und Rechtsanwälte
(86) Internationale Anmeldenummer: PCT/DE2020/100370
(87) Internationale Veröffentlichungsnummer: WO 2020/221400

(56) Entgegenhaltungen:
- EP-A1- 1 588 629
- EP-A2- 1 272 052
- WO-A1-2017/040998
- WO-A1-2017/172711
- AU-B2- 419 245
- US-A1- 2007 059 423

## Beschreibung

### 1. Gebiet der Erfindung

Die vorliegende Erfindung betrifft eine Zusammensetzung zur Herstellung eines Injektionsmittels für das Rohmaterial Fleisch aufweisend Pektin und Pflanzenfasern. Die Erfindung betrifft ferner ein Verfahren zur Veredelung des Rohmaterials Fleisch, sowie die Verwendung der erfindungsgemäßen Zusammensetzung zur Herstellung einer Kochpökelware. Ferner betrifft die Erfindung die Verwendung einer Zusammensetzung aufweisend Pektin zur Herstellung einer Kochpökelware.

### 2. Hintergrund

Injektionsmittel für das Rohmaterial Fleisch verbessern den Eiweißaufschluss und die Wasserbindefähigkeit in einer Kochpökelware. Zur Herstellung von Injektionsmitteln für das Rohmaterial Fleisch werden Mischungen eingesetzt, die häufig aus Phosphaten, Hydrokolloiden und Eiweißen zusammengesetzt sind. Diese Mischungen werden gelöst und in das rohe Fleisch injiziert. Das Fleisch wird oftmals noch mechanisch behandelt ("tumbeln") und danach gekocht. Durch den Einsatz von Injektionsmitteln kann der Wasserverlust beim Kochen des Fleisches deutlich reduziert werden. Phosphate im Injektionsmittel erhöhen den pH-Wert und verbessern dadurch den Eiweißaufschluss und das Wasserbindevermögen. Die Hydrokolloide tragen ebenfalls zu einer Erhöhung der Wasserbindefähigkeit bei. Zusätzlich wird der Eiweißaufschluss und das Wasserbindevermögen durch die mechanische Behandlung während des Tumbelns unterstützt.

Bisherige Injektionsmittel weisen als Hauptkomponenten oft Carrageene, teilweise in Verbindung mit Cellulosefasern auf. Der Nachteil der genannten Komponenten ist jedoch, dass die Kochpökelware oftmals einen unnatürlichen, gummiartigen Biss aufweist und somit ein für den Konsumenten unangenehmes Mundgefühl erzeugt. Außerdem steht Carrageen schon seit längerem im Verdacht die Darmschleimhaut zu schädigen, weshalb es beim Verbraucher keine hohe Akzeptanz findet. Ferner ist das finale Aroma der Kochpökelware oftmals nicht zufriedenstellend. Dadurch ergibt sich eine Notwendigkeit für alternative Zusammensetzungen zur Herstellung von Injektionsmitteln, welche die oben genannten Nachteile nicht aufweisen.

Die WO 2017/040998 A1 offenbart ein Verfahren zur Herstellung von Kochpökelware durch Injektion und Tumbling unter Verwendung einer Zusammensetzung aus löslichen Fasern wie Pektin und unlöslichen Fasern wie Citrusfasern.

### 3. Zusammenfassung der Erfindung

Die Aufgabe der Erfindung ist es also, eine verbesserte Zusammensetzung zur Herstellung von Injektionsmitteln bereitzustellen. Insbesondere soll das durch die Zusammensetzung hergestellte Injektionsmittel, wenn es in rohes Fleisch injiziert wird, der Kochpökelware einen besseren Biss verleihen, insbesondere ein für den Konsumenten verbessertes Mundgefühl. Zudem soll das Aroma der Kochpökelware verbessert werden.

Die Erfindung ist im beigefügten Anspruchssatz beschrieben.

Unter Injektionsmittel wird eine Mischung an Komponenten verstanden, die in rohes Fleisch eingebracht wird, um dem rohen Fleisch für die Weiterverarbeitung verbesserte technologische Eigenschaften zu verleihen und somit die organoleptischen Eigenschaften der prozessierten Kochpökelware zu verbessern. Zu verbesserten technologischen Eigenschaften zählt insbesondere ein erhöhtes Wasserbindungsvermögen. Unter verbesserten organoleptischen Eigenschaften ist insbesondere eine Verbesserung bezüglich Geschmack, Aussehen, Geruch und Konsistenz zu verstehen.

Unter Fleisch ist ein einem Tier entnommener Teil zu verstehen, z.B. ein aus der Hinterkeule des Schweins entnommener Teil, oder ein aus der Brust von Geflügel entnommener Teil. Rohes Fleisch ist indes Fleisch, das noch nicht prozessiert wurde, d.h. das insbesondere noch nicht gekocht wurde, aber auch nicht luftgetrocknet oder geräuchert wurde. Pektin ist ein Naturstoff, der in vielen pflanzlichen Nahrungsmitteln, wie zum Beispiel in Obst und Gemüse, vorkommt. Als Strukturelement der wachstumsfähigen Gewebe und als Hauptbestandteil ihrer Mittellamellen sorgt es bei den Pflanzen für den Zusammenhalt und die Stabilisierung der Gewebe und Zellen. Pektin ist eine makromolekulare Verbindung, die zur Gruppe der Heteropolysaccharide zählt. Hauptbestandteil ist die Polygalakturonsäure, die teilweise mit Methanol verestert ist. Die Polygalakturonsäure ist im Wesentlichen aus α-1,4- glykosidisch verknüpften D-Galakturonsäure-Einheiten aufgebaut, welche das Rückgrat des Pektinmoleküls bilden. Dieses lineare Rückgrat wird periodisch durch 1,2-Bindungen mit α-L-Rhamnose unterbrochen. Der Einbau von Rhamnose-Einheiten führt dazu, dass es in der formal geradlinigen Polygalacturonsäurekette zu Knicken kommt. Die Rhamnose-Bausteine in natürlichen Pektinen tragen wiederum oligomere Seitenketten aus den Zuckern Arabinose, Galactose oder Xylose. Pektin wird mit großem technischen Aufwand aus pflanzlichen Rohstoffen mit hohem Pektingehalt wie z.B. Apfeltrester, Citrusschalen oder Rübenschnitzeln, gewonnen. Als universell einsetzbares natürliches Gelier-, Verdickungs und Stabilisierungsmittel ist Pektin Bestandteil vieler Produkte, vor allem im Lebensmittel-, aber auch im non-Food-Bereich.

Cellulosefasern ist ein Oberbegriff für die aus natürlicher Cellulose bestehenden pflanzlichen Fasern und die Chemiefasern, die aus regenerierter oder veresterter Cellulose hergestellt werden. Cellulose ist der Hauptbestandteil pflanzlicher Zellwände und das am häufigsten vorkommende Biomolekül. Cellulose ist unverzweigt und besteht aus mehreren hunderten bis zehntausenden β-1,4-glykosidisch verknüpften β-D-Glucose-Einheiten. Diese hochmolekularen Celluloseketten lagern sich zu höheren Strukturen zusammen, die als reißfeste Fasern in Pflanzen häufig statische Funktionen haben. Cellulosefasern sind typischerweise unlöslich in wässriger Lösung, sind jedoch in der Lage beträchtliche Mengen an Wasser zu binden. Unter Cellulosefasern sind ebenfalls die sogenannten Hemicellulosen zu verstehen, welche neben den D-Glucoseeinheiten auch noch andere Monosaccharid- Einheiten aufweisen, wie z.B. D-Xylose und L-Arabinose. Hierbei können auch andere Verknüpfungen als die β-1,4-glykosidische Verknüpfung auftreten, wie z.B. β-1,3- und α-1,6-glykosidische Verknüpfungen.

In einer besonders bevorzugten Ausführungsform ist das niederveresterte lösliche Pektin ein nichtamidiertes Pektin. Unter einem nicht-amidierten Pektin ist erfindungsgemäß ein Pektin zu verstehen, bei dem die Galakturonsäure-Bausteine des Pektins nicht als Carbonsäureamide vorliegen.

Unter einem niederveresterten Pektin wird erfindungsgemäß ein Pektin verstanden, das einen Veresterungsgrad (°VE) von weniger als 50°VE aufweist.

Bei dem "löslichen Pektin" gemäß der vorliegenden Anmeldung handelt es sich um Pektin, das als separate Komponente neben der Cellulosefaser/bzw. Pflanzenfaser vorliegt. Es handelt sich damit in Abgrenzung von den nativen pflanzlichen Pektinen (sog. Protopektinen) um ein isoliertes Pektin. Das lösliche Pektin gemäß der Erfindung ist eine von der Pflanzenfaser getrennte Komponente und damit kein Bestandteil der Pflanzenfaser. Das lösliche Pektin wird üblicherweise durch Extraktion aus pflanzlichen Geweben gewonnen.

Die Pflanzenfaser gemäß der Erfindung ist eine Faser, die im Wesentlichen aus Cellulose und Hemicellulose besteht.

Die erfindungsgemäße Pflanzenfaser ist bevorzugt ausgewählt aus der Gruppe bestehend aus Zuckerrübenfaser, Quittenfaser, Zichorienwurzelfaser, Möhrenfaser, Erbsenfaser, Birnenfaser, Quittenfaser, Traubenfaser, Guavenfaser, Ananasfaser, Apfelfaser und Citrusfaser. In besonders bevorzugter Weise handelt es sich bei der Pflanzenfaser um eine Citrusfaser.

Erfindungsgemäß weist die Pflanzenfaser einen Pektingehalt von mehr als 2 Gew.% und weniger als 10 Gew.% auf.

Erfindungsgemäß enthält die Zusammensetzung einen Pektinanteil von 5 bis 50 Gew.-%, bevorzugter 10 bis 30 Gew.-%, am bevorzugtesten 12 bis 16 Gew.-%. Hierbei ist das Pektin ein niederverestertes lösliches Pektin.

Erfindungsgemäß enthält die Zusammensetzung einen Pflanzenfaseranteil von 0,5 bis 20 Gew.-%, bevorzugter von 1 bis 10 Gew.-%, am bevorzugtesten von 1,5 bis 5 Gew.-%. Hierbei weist die Pflanzenfaser einen wasserlöslichen Pektingehalt von mehr als 2 Gew.% und weniger als 10 Gew.% auf.

In einer bevorzugten Ausführungsform bestehen die Cellulosefasern aus Citrusfasern. Hierbei weist die Citrusfaser einen Pektingehalt von mehr als 2 Gew.% und weniger als 10 Gew.% auf. Citrusfasern zeichnen sich durch ein besonders hohes Wasserbinde- bzw. Wasserhaltevermögen aus. Vorzugsweise werden die Citrusfasern aus dem Flavedo und/oder Albedo von Citrusfrüchten gewonnen. Beispiele für Citrusfrüchte sind Mandarinen, Orangen, Pampelmusen, Limetten und Zitronen.

In einer bevorzugten Ausführungsform enthält die Zusammensetzung Protein.

Unter Protein ist jedes Protein insbesondere pflanzlichen und tierischen Ursprungs zu verstehen. Ein Protein, auch Eiweiß genannt, ist ein biologisches Makromolekül, das aus Aminosäuren durch Peptidbindungen aufgebaut ist. Proteine, die bis zu 100 via Peptidbindung (Amidbindung) verknüpfte Aminosäuren aufweisen, werden Peptide genannt. Auch hydrolysierte Proteine sind als Proteine zu verstehen.

In einer bevorzugten Ausführungsform enthält die Zusammensetzung einen Proteinanteil von 0,1 bis 5 Gew.-%, bevorzugter 0,2 bis 3 Gew.-%, am bevorzugtesten 0,4 bis 1,5 Gew.-%.

In einer bevorzugten Ausführungsform ist das Protein ein tierisches Protein, bevorzugter ein Schweine- und/oder Geflügelprotein, am bevorzugtesten ist das Protein ein hydrolysiertes Schweine- und/oder Geflügelprotein.

Die Hydrolyse des tierischen Proteins kann mittels enzymatischer und/oder chemischer Hydrolyse, wie z.B. in Gegenwart von Säure, durchgeführt werden. Der Hydrolysegrad kann mit jedem im Stand der Technik bekannten Verfahren gemessen werden, wie z.B. durch Messen freier Aminogruppen mittels des OPA-(o-Phythaldialdehyd)-Verfahren (Church et al., Anal. Biochem. 146:343, 1985). Durch Hydrolyse von tierischen Proteinen können deren Eigenschaften, wie z.B. das Wasserbindevermögen und organoleptische Eigenschaften, modifiziert bzw. verbessert werden.

In einer bevorzugten Ausführungsform enthält die Zusammensetzung Phosphat und/oder Citrat.

Phosphate sind die Salze und Ester der ortho-Phosphorsäure (H₃PO₄ ), sowie auch die Kondensate (Polymere) der ortho-Phosphorsäure und ihrer Ester. Die Salze der dreibasigen *ortho-*Phosphorsäure lassen sich in primäre, sekundäre und tertiäre Phosphate einteilen. Bei einwertigen Kationen M⁺ gelten die Summenformeln entsprechend MH₂PO₄, M₂HPO₄ und M₃PO₄. Durch die teilweise Neutralisation der Phosphorsäure erhält man Hydrogen- oder Dihydrogenphosphate. Beispiele für Phosphate sind Natriumphosphat (E 339), Kaliumphosphat (E 340), Calciumphosphat (E 341), Magnesiumphosphate (E 343), sowie die Salze der Diphosphorsäure (Diphosphate (E 450)), der Triphosphorsäure (Triphosphate (E 451)) und der Polyphosphorsäure (Polyphosphate (E 452)).

Unter Citrate werden die Ester, Salze und das Anion der Citronensäure verstanden. Beispiele für Citrate sind Natriumcitrat, Kaliumcitrat, Magnesiumcitrat. Bevorzugt liegt das Citrat in Form von Natriumcitrat vor.

In einer bevorzugten Ausführungsform enthält die Zusammensetzung von 1 bis 12 Gew.-% Phosphat, bevorzugter von 2 bis 8 Gew.-%, am bevorzugtesten von 4 bis 7 Gew.-%.

In einer bevorzugten Ausführungsform enthält die Zusammensetzung von 10 bis 35 Gew.-% Citrat, bevorzugter von 15 bis 30 Gew.-%, am bevorzugtesten von 20 bis 25 Gew.-%.

In einer bevorzugten Ausführungsform sind die Galakturonsäure-Bausteine des Pektins teilweise mit Methanol verestert. Hierbei ist das Pektin bevorzugt ein niederverestertes lösliches Pektin.

In einer bevorzugten Ausführungsform weist das Pektin einen Veresterungsgrad (°VE) zwischen 20 und 40 °VE auf, bevorzugter zwischen 24 und 32 °VE, am bevorzugtesten zwischen 25 und 29 °VE. Hierbei ist das Pektin bevorzugt ein niederverestertes lösliches Pektin. Der Veresterungsgrad beschreibt den prozentualen Anteil der Carboxylgruppen in den Galakturonsäure-Einheiten des Pektins, welche in veresterter Form vorliegen, z.B. als Methylester, wenn die Veresterung mit Methanol stattgefunden hat. Der Veresterungsgrad kann mittels Methode nach JECFA (Monograph 19-2016, Joint FAO/WHO Expert Committee on Food Additives) bestimmt werden. Der Veresterungsgrad, der mit der Herkunft und der Herstellung des Pektins schwankt, beeinflusst das Gelierverhalten und die Viskosität eines Pektins in wässriger Lösung.

In einer bevorzugten Ausführungsform enthält das Pektin ein Apfelpektin und/oder Citrusschalenpektin und/oder Rübenschnitzelpektin, bevorzugter besteht das Pektin aus Apfelpektin und/oder Citrusschalenpektin und/oder Rübenschnitzelpektin. Hierbei ist das Pektin bevorzugt ein niederverestertes lösliches Pektin. Apfeltrester weist einen Pektingehalt von 10 bis 15 % auf, Rübenschnitzel von 10 bis 20 % und Citrusschalen von 20 bis 35 %.

In einer bevorzugten Ausführungsform ist die Zusammensetzung in Pulverform.

In einer bevorzugten Ausführungsform enthält die Zusammensetzung Stärke, bevorzugter Kartoffelstärke.

Unter Stärke ist ein Polysaccharid zu verstehen, welches aus α-D-Glucose-Einheiten aufgebaut ist, diese können α-1,4- und α-1,6-glykosidisch miteinander verknüpft sein. Bevorzugt enthält die Zusammensetzung einen Stärkeanteil von 5 bis 20 Gew.-%, bevorzugter von 8 bis 12 Gew.-%.

In einer bevorzugten Ausführungsform enthält die Zusammensetzung Maltodextrin.

Maltodextrin ist ein wasserlösliches Kohlenhydratgemisch, das durch Hydrolyse von Stärke hergestellt wird. Die Hydrolyse kann durch Säure oder enzymatisch durchgeführt werden. Der Hydrolysegrad wird durch das Dextrose-Äquivalent (DE) angegeben. Bevorzugt ist der DE-Wert des Maltodextrins in der Zusammensetzung zwischen 18 und 20. Bevorzugt ist der Anteil an Maltodextrin in der Zusammensetzung von 10 bis 50 Gew.-%, bevorzugter von 25 bis 45 Gew.-%, am bevorzugtesten von 35 bis 43 Gew.-%.

In einer bevorzugten Ausführungsform enthält die Zusammensetzung ein oder mehrere Monosaccharide, d.h. Einfachzucker. Monosaccharide können sein z.B. Triosen, Tetrosen, Pentosen oder Hexosen. Bevorzugt enthält die Zusammensetzung Dextrose. Bevorzugt ist der Anteil an Monosacchariden in der Zusammensetzung von 1 bis 30 Gew.-%, bevorzugter von 10 bis 25 Gew.-%, am bevorzugtesten von 17 bis 23 Gew.-%.

In einer bevorzugten Ausführungsform enthält die Zusammensetzung klare Brühe.

Unter klarer Brühe ist eine wässrige Lebensmittelzusammensetzung zu verstehen, wobei die gelösten Bestandteile überwiegend Gewürzzutaten sind. Bevorzugt ist der Anteil an klarer Brühe in der Zusammensetzung von 0,1 bis 2 Gew.-%, bevorzugter von 0,5 bis 1 Gew.-%, am bevorzugtesten von 0,7 bis 0,9 Gew.-%.

In einer bevorzugten Ausführungsform enthält die Zusammensetzung einen Entschäumer.

Entschäumer sind chemische Formulierungen mit ausgeprägter Grenzflächenaktivität, die geeignet sind, unerwünschte Schaumbildung in Lebensmitteln bzw. bei dessen Prozessierung zu reduzieren oder zu verhindern. Beispiele für Entschäumer sind Mono- und Diglyceride von Speisefettsäuren. Bevorzugt ist der Anteil an Entschäumer in der Zusammensetzung von 0,1 bis 1 Gew.-%, bevorzugter von 0,2 bis 0,4 Gew.-%.

In einer bevorzugten Ausführungsform enthält die Zusammensetzung Kieselsäure (E 551) als Rieselhilfsmittel. Bevorzugt ist der Anteil an Kieselsäure im Schinkenspritzmittel von 0,05 bis 0,2 Gew.-%, bevorzugter von 0,08 bis 0,12 Gew.-%.

In einer bevorzugten Ausführungsform enthält die Zusammensetzung Aromastoffe.

Unter Aromastoffe werden chemische Stoffe oder Stoffgemische verstanden, welche einem Lebensmittel einen spezifischen Geruch und/oder Geschmack verleihen können. Bevorzugt ist der Aromastoff ein Puten- und/oder Schweinearoma. Bevorzugt ist der Anteil an Aromastoffen in der Zusammensetzung von 0,1 bis 5 Gew.-%, bevorzugter von 0,5 bis 2,5 Gew.-%, am bevorzugtesten von 1 bis 1,5 Gew.-%.

In einer bevorzugten Ausführungsform ist die erfindungsgemäße Zusammensetzung Halal und/oder Kosher.

Halal bedeutet, dass die Zusammensetzung mit den Speisevorschriften der islamischen Religion übereinstimmt, Kosher bedeutet, dass die Zusammensetzung mit den Speisevorschriften des jüdischen Glaubens übereinstimmt.

Die vorliegende Erfindung betrifft außerdem ein Verfahren zur Veredelung des Rohmaterials Fleisch, aufweisend die folgenden Schritte:
a.) Vermischen der erfindungsgemäßen Zusammensetzung mit einem wässrigen Lösungsmittel und Nitritpökelsalz um ein Injektionsmittel zu erhalten;
b.) Injektion des in Schritt a.) erhaltenen Injektionsmittels in das Rohmaterial Fleisch.

Unter einem wässrigen Lösungsmittel ist insbesondere Wasser zu verstehen, aber auch jedes andere Lösungsmittel, welches einen Teil Wasser enthält ist davon erfasst.

Nitritpökelsalz bezeichnet eine Mischung aus Kochsalz (NaCl) und Natriumnitrit (NaNO₂), die verwendet wird, um Fleisch und Wurstwaren haltbar zu machen. Das Pökelsalz hat ferner antibakterielle und antioxidative Eigenschaften, erhält die rote Farbe des Fleisches und verleiht ihm das typische Pökelaroma.

Injektion des Injektionsmittels bedeutet, dass das Injektionsmittel in das Rohmaterial Fleisch eingebracht wird. Dies geschieht bevorzugt mittels eines Injektors und/oder einer Lakespritze.

In einer bevorzugten Ausführungsform weist das in Schritt a.) erhaltene Injektionsmittel einen Anteil an der erfindungsgemäßen Zusammensetzung von 5 bis 20 Gew.-% auf, bevorzugter von 10 bis 15 Gew.-%.

In einer bevorzugten Ausführungsform weist das in Schritt a.) erhaltene Injektionsmittel einen Anteil an Nitritpökelsalz von 5 bis 20 Gew.-% auf, bevorzugter von 8 bis 12 Gew.-%.

In einer bevorzugten Ausführungsform wird in Schritt a.) zusätzlich ein Calciumsalz zugegeben, insbesondere Calciumcitrat und/oder Calciumchlorid und/oder Calciumlaktat. Bevorzugt weist das in Schritt a.) erhaltene Injektionsmittel einen Anteil an Calciumsalz von 0,05 bis 5 Gew.-% auf, bevorzugter von 0,1 bis 1 Gew.-%. Calcium-Ionen (Ca²⁺-Ionen) können insbesondere die Gelbildung von negativ geladenen Hydrokolloiden fördern wie z.B. Pektin, indem sie sich zwischen zwei Polymerketten anlagern und über elektrostatische Wechselwirkungen eine Assoziation der Ketten bewirken. Durch die Anlagerung weiterer Schichten entstehen so die Verknüpfungszonen und ein dreidimensionales Netzwerk (Gel) kann sich ausbilden.

In einer bevorzugten Ausführungsform nimmt die Gesamtmasse des Rohmaterials Fleisch durch die Injektion in Schritt b.) um 5 bis 100 Gew.-% zu, bevorzugter um 10 bis 40 %, am bevorzugtesten um 15 bis 25 %.

In einer bevorzugten Ausführungsform wird das nach Schritt b.) erhaltene Rohmaterial Fleisch in einem weiteren Schritt c.) einer mechanischen Behandlung unterworfen, bevorzugt in einem Tumbler.

Unter "tumbeln" versteht man die mechanische Behandlung von Fleisch, die ihm eine zartere Struktur verleiht und das Wasserbindevermögen erhöht. Dabei wird das Fleisch in großen Trommeln bei niedriger Temperatur für mehrere Stunden herumgewälzt. Bevorzugt ist die Temperatur im Tumbler von 1 bis 3 °C.

In einer bevorzugten Ausführungsform wird das nach Schritt b.) oder c.) erhaltene Rohmaterial Fleisch in einem weiteren Schritt d.) in einem Kochschrank erhitzt. Bevorzugt wird das Rohmaterial Fleisch auf eine Kerntemperatur von 60 bis 75 °C erhitzt.

Die vorliegende Erfindung betrifft außerdem die Verwendung einer Zusammensetzung aufweisend lösliches Pektin zur Herstellung einer Kochpökelware.

In einer bevorzugten Ausführungsform, wird die Zusammensetzung in einem Injektionsmittel für das Rohmaterial Fleisch verwendet.

In einem weiteren Aspekt stellt die Erfindung eine Kochpökelware bereit, die die erfindungsgemäße Zusammensetzung enthält.

In einem zusätzlichen Aspekt betrifft die Erfindung eine Kochpökelware, die unter Verwendung der erfindungsgemäßen Zusammensetzung hergestellt worden ist. Diese Kochpökelware enthält damit die Zusammensetzung in prozessierter d.h. durch Erhitzen induzierter gelierter Form.

Dem Fachmann sind zahlreiche Ausgestaltungen für Kochpökelware bekannt, die er dann entsprechend für die Behandlung mit der erfindungsgemäßen Zusammensetzung einsetzen kann. Bevorzugt ist die Kochpökelware ausgewählt aus der Gruppe bestehend aus Kochschinken, Vorderkochschinken, Kasseler, Kaiserfleisch, Back- und Geflügelschinken, Pökelzunge, Bratenaufschnitt gekochter Speck/Bacon, Rinderbrust gepökelt oder Eisbein gepökelt.

In einer bevorzugten Ausführungsform wird die erfindungsgemäße Zusammensetzung mindestens aufweisend Pektin und Pflanzenfasern wie oben beschrieben verwendet. In einer weiterhin bevorzugten Ausführungsform wird die erfindungsgemäße Zusammensetzung umfassend niederverestertes lösliches Pektin und Pflanzenfaser verwendet, wobei die Pflanzenfaser zweckmäßigerweise einen wasserlöslichen Pektingehalt von mehr als 2 Gew.% und weniger als 10 Gew.% aufweist.

### 4. Detaillierte Beschreibung der Erfindung

Im Folgenden wird die Erfindung anhand von Beispielen im Detail beschrieben.

Gelierversuche mit verschiedenen Pektinen:
Um die Viskosität sowie das Gelierverhalten von Pektinen mit unterschiedlichem Veresterungsgrad (°VE) zu untersuchen, wurden die folgenden Experimente durchgeführt. Ferner wurden in einigen Versuchen Citrusfasern, Protein und Calciumsalz zugegeben, um ebenfalls deren Einfluss auf die Viskosität und das Gelierverhalten zu untersuchen.

Material:
Citruspektin (22,2 °VE)
Citruspektin (25,3 °VE)
Citruspektin (28,0 °VE)
Citruspektin (30,7 °VE)
Citruspektin (33,3 °VE)
Citrusfasern (Herbacel AQ Plus Citrus NO1)
Protein (Hydrolysiertes Schweineprotein, Hydro-P Premium, Fa. Sonac)
Die Citrusfaser Herbacel AQ Plus Citrus N01 ist durch einen Pektingehalt von größer als 2 Gew.- % und kleiner als 10 Gew.-% gekennzeichnet.

Die folgenden Lösungen wurden hergestellt:
Pektinlösung (Durchführung 1): Jeweils 3 g Pektin wurden mit 12 g Nitritpökelsalz gemischt und unter Rühren (Turrax-Mischgerät) in 100 g kochendem Wasser gelöst. Von jeder Lösung wurde außerdem eine Mischung hergestellt, der zusätzlich 5 ml Calciumchlorid-Lsg. (5 %-ig) zugesetzt wurden.

Pektinlösung mit Citrusfasern (Durchführung 2): Von den Citruspektinen mit 28,0 °VE, 30,7 °VE und 33,3 °VE wurden zusätzlich Lösungen hergestellt, die zusätzlich zu den unter Durchführung 1 beschriebenen Komponenten 0,3 g Citrusfasern (Herbacel AQ Plus Citrus NO1) enthielten.

Pektinlösung mit hydrolysiertem Schweineprotein (Durchführung 3): Hierfür wurde jeweils eine Pektinlösung wie oben beschrieben (Durchführung 1) hergestellt, die bezogen auf die Wassermenge zusätzlich 0,1, 1 bzw. 10 % hydrolysiertes Schweineprotein enthielt.

Pektinlösung mit Citrusfasern und hydrolysiertem Schweineprotein (Durchführung 4): Von dem Citruspektin mit 28,0 °VE wurde zusätzlich eine Lösung hergestellt wie die oben genannte Pektinlösung mit Citrusfasern (Durchführung 2), die bezogen auf die Wassermenge zusätzlich 0, 1 % hydrolysiertes Schweineprotein enthielt.

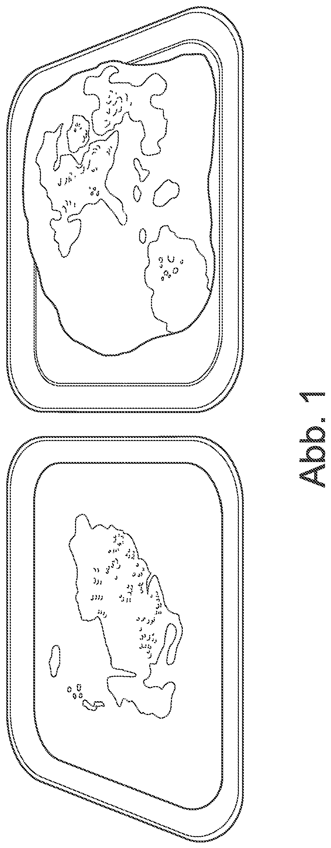

Von den so hergestellten Lösungen, wurden jeweils die Viskositäten bei 68 °C und drei verschiedenen Schergeschwindigkeiten (D = 125 s⁻¹ , D = 250 s⁻¹ und D = 500 s⁻¹) bestimmt (Viskosimeter: Physica MCR 101, Messkörper CC25, Fa. Anton Paar). Die Ergebnisse sind in den Tabellen 1 bis 4 zusammengefasst. Tabelle 5 zeigt zusätzlich die Bestimmung der Bruchfestigkeit (nach Lüers) der Calcium-haltigen Gele von dem Citruspektin mit 28,0 °VE. Die Abbildungen 1 bis 5 zeigen Fotos der abgekühlten Versuchsansätze der Pektinlösungen mit und ohne Zusatz von Calciumchlorid (nach Durchführung 1). Die Tabellen 6 bis 8 beschreiben die Pektingele hinsichtlich ihrer Textur und Aussehen.

**Tabelle 1. Viskositäten der Versuchsansätze von Pektin bei 68°C (siehe Durchführung 1).**

| Pektin °VE | Calcium | Viskosität [mPas] | | |
|---|---|---|---|---|
| | | D=125s⁻¹ | D=250s⁻¹ | D=500s⁻¹ |
| 22,2 | - | 4 | 4 | 5 |
| | + 5 mL CaCl₂ 5% | 9 | 7 | 6 |
| 25,3 | - | 15 | 12 | 11 |
| | + 5 mL CaCl₂ 5% | 17 | 13 | 11 |
| 28,0 | - | 31 | 28 | 26 |
| | + 5 mL CaCl₂ 5% | 33 | 26 | 24 |
| 30,7 | - | 137 | 117 | 102 |
| | + 5 mL CaCl₂ 5% | 245 | 170 | 131 |
| 33,3 | - | 180 | 153 | 133 |
| | + 5 mL CaCl₂ 5% | 190 | 149 | 125 |

**Tabelle 2. Viskositäten der Versuchsansätze von Pektin mit Citrusfasem bei 68°C (siehe Durchführung 2).**

| Pektin °VE + AQ Plus | Calcium | Viskosität [mPas] | | |
|---|---|---|---|---|
| | | D=125s⁻¹ | D=250s⁻¹ | D=500s⁻¹ |
| 28,0 + 0,3% | - | 43 | 37 | 33 |
| | + 5 mL CaCl₂ 5% | 49 | 38 | 33 |
| 30,0 + 0,3% | - | 161 | 136 | 118 |
| | + 5 mL CaCl₂ 5% | 284 | 205 | 153 |
| 33,3 + 0,3% | - | 194 | 167 | 145 |
| | + 5 mL CaCl₂ 5% | 224 | 173 | 142 |

**Tabelle 3. Viskositäten der Versuchsansätze von Pektin (28 °VE) mit Protein bei 68°C (siehe Durchführung 3).**

| Pektin °VE + Protein | Calcium | Viskosität [mPas] | | |
|---|---|---|---|---|
| | | D=125s⁻¹ | D=250s⁻¹ | D=500s⁻¹ |
| 28,0 + 0,1% | - | 28 | 25 | 24 |
| | + 5 mL CaCl₂ 5% | 29 | 23 | 22 |
| 28,0 + 1,0 | - | 22 | 20 | 20 |
| | + 5 mL CaCl₂ 5% | 22 | 20 | 20 |
| 28,0 + 10% | - | 14 | 12 | 12 |
| | + 5 mL CaCl₂ 5% | 25 | 23 | 21 |

**Tabelle 4. Viskositäten der Versuchsansätze von Pektin (28 °VE), Pektin mit Protein und Pektin mit Protein und Citrusfasern bei 68°C (siehe Durchführung 4).**

| Pektin °VE + Protein + AQ Plus | Calcium | Viskosität [mPas] | | |
|---|---|---|---|---|
| | | D=125s⁻¹ | D=250s⁻¹ | D=500s⁻¹ |
| 28,0 + 0% + 0% | + 0%- | 31 | 28 | 26 |
| | + 5 mL CaCl₂ 5% | 33 | 26 | 24 |
| 28,0 + 0,1% + 0% | - | 28 | 25 | 24 |
| | + 5 mL CaCl₂ 5% | 29 | 23 | 22 |
| 28,0 + 0,1% + 0,3% | - | 36 | 32 | 31 |
| | + 5 mL CaCl₂ 5% | 45 | 37 | 33 |

**Tabelle 5. Bestimmung der Bruchfestigkeit der Ca-haltigen Gele von Pektin (28,0 °VE).**

| Pektin °VE + Protein + AQ Plus | Lüers [HPE¹] |
|---|---|
| 28,0 + 0% + 0% | 1181 |
| 28,0 + 0,1% + 0% | 1544 |
| 28,0 + 0,1% + 0,3% | 1870 |

| | |
|---|---|
| ¹ Herbstreith-Pektinometer-Einheiten (HPE) | |

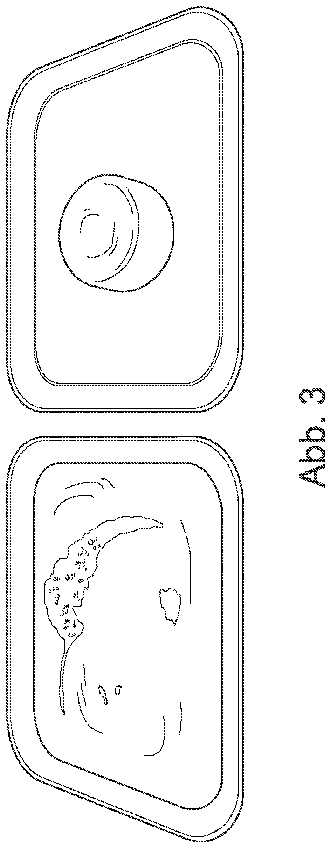

**Tabelle 6. Beschreibung der Gele mit Pektin (siehe Abb. 3, 4 und 5)**

| | Pektin (28,0 °VE) | | Pektin (30,7 °VE) | | Pektin (33,3 ^{O}VE) | |
|---|---|---|---|---|---|---|
| | ohne Ca | mit Ca | ohne Ca | mit Ca | ohne Ca | mit Ca |
| **Textur** | nicht durchgehend geliert | stichfest, sehr spröde, rauher Bruch, Synärese | weicher als mit 33,3 °VE, glänzend und trüb, streichfähig und glatter als 33,3 °VE, keine Syneräse | stichfest, sehr fest sehr spröde, matter / rauer Bruch, keine Syneräse | weich, glänzend, streichfähig keine Synärese | stichfest, sehr fest sehr spröde, glatter / glänzender Bruch, keine Synärese |
| **Aussehen** | flüssig | gute Wandablösung | moderate Wandablösung | gute Wandablösung große Luftblasen | schlechte Wandablösung | gute Wandablösung, kleine, feinverteilte Luftblasen |

**Tabelle 7. Beschreibung der Gele mit Pektin und Citrusfasern**

| | Pektin (28,0 °VE) | | Pektin (30,7 °VE) | | Pektin (33,3 ^{O}VE) | |
|---|---|---|---|---|---|---|
| | ohne Ca | mit Ca | ohne Ca | mit Ca | ohne Ca | mit Ca |
| **Textur** | dünnflüssig | stichfestes und sprödes Gel, nicht streichfähig, etwas strukturierter Bruch | stichfestes, weiches Gel, glänzender, glatter Bruch. streichfähig, gute Wandablösung | dunkler, fester als mit 28,0 °VE, nicht streichfähig, strukturierter und spröder Bruch | stichfestes und weiches Gel (fester als 30,7 ^{O}VE), glänzender und glatter Bruch, streichfähig (schlechter als 30,7 ∘VE), gute Wand ablösung | dunkel und fest (etwa wie 30,7 ^{O}VE), nicht streichfähig, strukturierter und spröder Bruch |
| **Aussehen** | viel Schaum | matte Geloberfläche, kleine Luftblasen, gute Wandablösung, Synärese, viel Schaum | fein verteilte Luftblasen | matte Geloberfläche, große Luftblasen, gute Wandablösung, keine Synärese, Schaum | fein verteilte Luftblasen | glänzendere Geloberfläche, kleine Luftblasen, gute Wandablösung, keine Synärese, Schaum |

**Tabelle 8. Beschreibung der Gele mit Pektin (28,0 °VE) und hydrolysiertem Schweineprotein**

| | 0,1 % Protein | | 1,0 % Protein | | 10,0 % Protein | |
|---|---|---|---|---|---|---|
| | ohne Ca | mit Ca | ohne Ca | mit Ca | ohne Ca | mit Ca |
| **Textur** | dünnflüssig, glänzend | keine Synärese stichfest, spröder/ strukturierter Bruch, nicht streichfähig | dünnflüssig, glänzend, prägnanter Geruch (Schweine protein) | etwas Synärese, etwas weicher, aber stichfest, spröder/ strukturierter Bruch, nicht streichfähig | dünnflüssig, glänzend, Prägnanter Geruch (Schweineprotein) | Synärese, weich, nicht stichfest |
| **Aussehen** | hell, viel Schaum | hell, viel Schaum, gute Wandablösung | etwas dunkler, weniger Schaum | etwas dunkler, weniger Schaum, gute Wandablösung | deutlich dunkler, weniger Schaum | deutlich dunkler, weniger Schaum, gute Wandablösung |

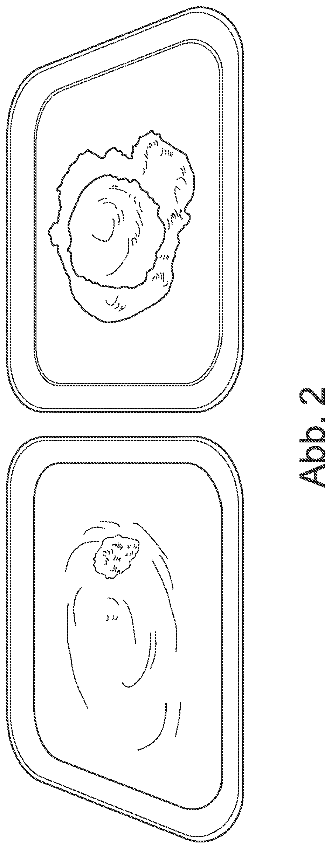

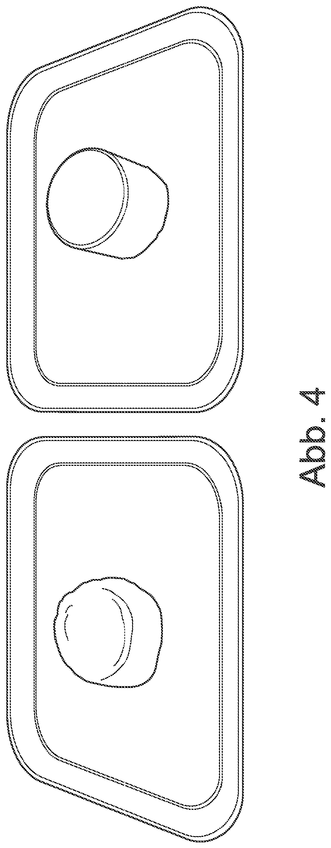

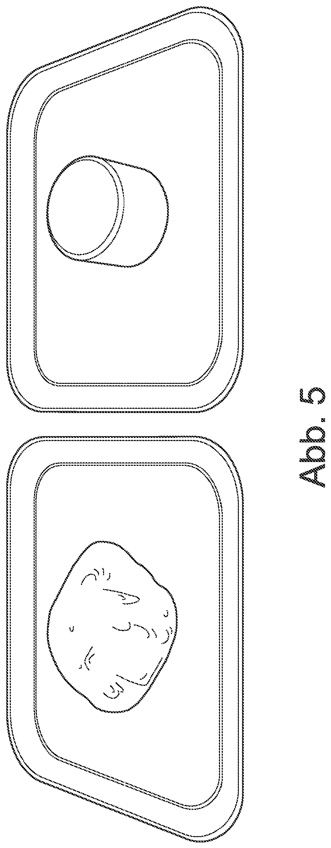

Es zeigt sich, dass die Pektine sowohl mit als auch ohne Calcium-Zusatz ein vom Veresterungsgrad abhängiges Gelierverhalten zeigen. Die Heißviskosität (68 °C) nimmt mit steigendem Veresterungsgrad kontinuierlich zu (Tabelle 1). Während des Abkühlens kann ein calciumvermitteltes Gelierverhalten beobachtet werden. Die Pektine mit 22 °VE und 25 °VE zeigen auch mit Calcium nur ein geringes Gelierverhalten (Abb. 1 und 2). Das Pektin mit 28 °VE besitzt sowohl mit als auch ohne Calciumzusatz eine niedrige Heißviskosität (68 °C) von 20 bis 30 mPas. Während des Abkühlens bildet der Calcium-haltige Ansatz jedoch ein festes Gel aus. Mit steigendem Veresterungsgrad (30,7 °VE, 33,3 °VE) steigt die Heißviskosität auf Werte von über 100 mPas und auch ohne Calciumzusatz kommt es zu einer deutlichen Verfestigung beim Abkühlen (Abb. 4 und 5). Der Zusatz von Citrusfasern bewirkt einen Anstieg der Heißviskosität (siehe Tabelle 2) und eine Verfestigung der Calcium-Gele (Tabelle 5), die Synärese des Calcium-haltigen Gels konnte jedoch dadurch nicht verhindert werden. Der Zusatz von hydrolysiertem Schweineprotein hat nur einen geringen Einfluss auf die Heißviskosität (Tabelle 3), eine Synärese des Calcium-haltigen Gels des Pektins mit 28 °VE wurde bei einem Proteingehalt von 0,1 % aber fast vollständig verhindert; mit steigendem Proteingehalt nahm die Synärese aber wieder zu (Tabelle 8). Die Kombination eines niedrigen Proteingehaltes (0, 1 %) mit Citrusfasern lieferte für das Pektin mit 28 °VE ein festes, aber noch elastisches Gel.

### Herstellung eines Injektionsmittels für das Rohmaterial Fleisch:

Vorbereitung einer Zusammensetzung zur Herstellung eines Injektionsmittels für rohes Geflügelfleisch: Die Rohstoffe gemäß Tabelle 9 (Vergleichsrezeptur) bzw. Tabelle 10 (erfindungsgemäße Rezeptur) wurden eingewogen und vermischt.

**Tabelle 9. Zusammensetzung der Vergleichsrezeptur (Bestandteile in Gew.-%)**

| Vergleichsrezeptur (Carragen-Rezeptur) | |
|---|---|
| Kartoffelstärke | 9,1 |
| Maltodextrin (Glucidex IT 19) | 38,2 |
| Natriumtripolyphosphat | 3,1 |
| Tetrakaliumpyrophosphat | 3,1 |
| Dextrose | 18,3 |
| Klare Brühe | 0,7 |
| Entschäumer | 0,2 |
| Rieselhilfsmittel Kielselsäure (Tixosil 38) | 0,1 |
| Aromastoff (Lucta 13762 A) | 0,7 |
| Carrageen (Ceamgel M 9191) | 12,2 |
| Bambusfasern (Canacel Bamboo 40) | 11,2 |
| Carageen (Hydrokolloid extrahiert aus Rotalgen - Ceamvis 3387) | 3,1 |
| Summe | 100,0 |

**Tabelle 10. Zusammensetzung der erfindungsgemäßen Rezeptur (Bestandteile in Gew.-%)**

| Erfindungsgemäße Rezeptur (Pektin-Rezeptur) | |
|---|---|
| Kartoffelstärke | 10,1 |
| Maltodextrin (Glucidex IT 19) | 42,5 |
| Natriumtripolyphosphat | 3,4 |
| Tetrakaliumpyrophosphat | 3,4 |
| Dextrose | 20,3 |
| Klare Brühe | 0,8 |
| Entschäumer | 0,3 |
| Rieselhilfsmittel Kielselsäure (Sipernat) | 0,1 |
| Putenaroma | 1,1 |
| Pektin (Citruspektin VE 28°) | 16,0 |
| Citrusfaser (Herbacel AQ Plus Citrus N01) | 1,6 |
| Geflügelprotein (z.B. Poultry Protein C 80) | 0,5 |
| Summe | 100,0 |

### Herstellung der Injektionslösung für rohes Geflügelfleisch:

Zunächst wurden die Trockenstoffe vermengt, d.h. 17 kg der Zusammensetzung gemäß Tabelle 9 bzw. Tabelle 10 mit jeweils 12 kg Nitritpökelsalz.

Danach wurde die Mischung der Trockenstoffe in 90 Liter Wasser und 10 kg Eis eingearbeitet, um das Injektionsmittel zu erhalten.

### Injektion des Injektionsmittels in das Rohmaterial Fleisch:

Das Injektionsmittel (Spritzlake) wurde mittels Injektor (Günther, Typ PI54/105, Baujahr 2015) in das rohe Geflügelfleisch injiziert, wodurch die Gesamtmasse des Fleisches um 20 Gew.-% zunahm.

### Mechanische Behandlung des Rohmaterials Fleisch:

Nach Injektion des Injektionsmittels wurde das rohe Geflügelfleisch in einem Tumbler (Günther, GPA 150x, Baujahr 2009) mechanisch behandelt, wobei folgende Einstellungen beim Tumbler vorgenommen wurden: Turnus (20 min Arbeit/10 min Pause), 4 Umdrehungen/min, 90 % Vakuum, Temperatur 2 °C.

### Kochen des rohen Geflügelfleisches:

Nach der mechanischen Behandlung wurde das rohe Geflügelfleisch eingeformt und in einem Kochschrank (Rauch- und Kochanlage ASR 1295 EL/WA, Baujahr 2008) stufenweise gekocht:
Stufe 1: Kochen bei 60 °C auf eine Fleisch-Kerntemperatur von 55 °C
Stufe 2: Kochen bei 65 °C auf eine Fleisch-Kerntemperatur von 60 °C
Stufe 3: Kochen bei 75 °C auf eine Fleisch-Kerntemperatur von 70 °C (Endtemperatur)
Stufe 4: Evakuieren des gekochten Fleisches für 2 min
Stufe 5: Duschen des gekochten Fleisches für 20 min

Anschließend wurden die Fleischformen 24 Stunden gekühlt gelagert und danach wieder ausgeformt.

### Vergleich der sensorischen Eigenschaften der Geflügel-Kochpökelware:

Geprüft wurden die sensorischen Eigenschaften von einem Panel bestehend aus 6 Personen. Die Geflügel-Kochpökelware, die mit der Vergleichsrezeptur (Tabelle 9) hergestellt wurde, wies einen gummiartigen Biss auf, wobei die Geflügel-Kochpökelware, die mit der erfinderischen Rezeptur (Tabelle 10) hergestellt wurde, einen sehr ausgewogenen, natürlichen Biss aufwies.

Die mit der erfinderischen Rezeptur hergestellte Geflügel-Kochpökelware wies durch das angenehmere Mundgefühl außerdem einen aromatischeren Geschmack auf als die Geflügel-Kochpökelware, die mit der Vergleichsrezeptur hergestellt wurde.

### Es zeigen

Abb.1: Gelierverhalten von Pektin mit °VE 22,2. Links ohne Calcium-Zusatz, rechts mit Calciumzusatz.

Abb.2: Gelierverhalten von Pektin mit °VE 25,3. Links ohne Calcium-Zusatz, rechts mit Calciumzusatz.

Abb.3: Gelierverhalten von Pektin mit °VE 28,0. Links ohne Calcium-Zusatz, rechts mit Calciumzusatz.

Abb.4: Gelierverhalten von Pektin mit °VE 30,7. Links ohne Calcium-Zusatz, rechts mit Calciumzusatz.

Abb.5: Gelierverhalten von Pektin mit °VE 33,3. Links ohne Calcium-Zusatz, rechts mit Calciumzusatz.

## Patentansprüche

1. Zusammensetzung zur Herstellung eines Injektionsmittels für das Rohmaterial Fleisch, aufweisend:
- Isoliertes niederverestertes lösliches Pektin; und
- Pflanzenfasern,
wobei die Pflanzenfaser einen wasserlöslichen Pektingehalt von mehr als 2 Gew.% und weniger als 10 Gew.% aufweist;
wobei die Zusammensetzung 5 bis 50 Gew.-% isoliertes niederverestertes lösliches Pektin enthält; und
wobei die Zusammensetzung 0,5 bis 20 Gew.-% Pflanzenfasern enthält.

2. Zusammensetzung gemäß Anspruch 1, wobei das isolierte niederveresterte lösliche Pektin einen Veresterungsgrad zwischen 20 und 40 °VE aufweist, bevorzugt zwischen 24 und 32 °VE, bevorzugter ist der Veresterungsgrad zwischen 25 und 29 °VE.

3. Zusammensetzung gemäß Anspruch 1 oder 2, wobei die Pflanzenfaser ausgewählt ist aus der Gruppe bestehend aus Zuckerrübenfaser, Quittenfaser, Zichorienwurzelfaser, Möhrenfaser, Erbsenfaser, Birnenfaser, Quittenfaser, Traubenfaser, Guavenfaser, Ananasfaser, Apfelfaser und Citrusfaser, wobei Citrusfaser bevorzugt ist.

4. Zusammensetzung gemäß einem der vorhergehenden Ansprüche, wobei die Zusammensetzung 10 bis 30 Gew.-% isoliertes niederverestertes lösliches Pektin enthält, bevorzugt 12 bis 16 Gew.-%.

5. Zusammensetzung gemäß einem der vorhergehenden Ansprüche, wobei die Zusammensetzung 1 bis 10 Gew.-% Pflanzenfasern enthält, bevorzugt 1,5 bis 5 Gew.-%.

6. Zusammensetzung gemäß einem der vorhergehenden Ansprüche, wobei die Zusammensetzung Protein enthält.

7. Zusammensetzung gemäß Anspruch 6, wobei die Zusammensetzung 0,1 bis 5 Gew.-% Protein enthält, bevorzugt 0,2 bis 3,0 Gew.-%, bevorzugter 0,4 bis 1,5 Gew.-%.

8. Zusammensetzung gemäß einem der Ansprüche 6 oder 7, wobei das Protein ein tierisches Protein ist, bevorzugt ein Schweine- und/oder Geflügelprotein, bevorzugter ein hydrolysiertes Schweine- und/oder Geflügelprotein.

9. Zusammensetzung gemäß einem der vorhergehenden Ansprüche, wobei die Zusammensetzung Phosphat und/oder Citrat enthält.

10. Zusammensetzung gemäß Anspruch 9, wobei die Zusammensetzung 1 bis 12 Gew.-% Phosphat enthält, bevorzugt 2 bis 8 Gew.-%, bevorzugter 4 bis 7 Gew.-%.

11. Zusammensetzung gemäß einem der Ansprüche 9 oder 10, wobei die Zusammensetzung 10 bis 35 Gew.-% Citrat enthält, bevorzugt 15 bis 30 Gew.-%, bevorzugter 20 bis 25 Gew.-%.

12. Zusammensetzung gemäß einem der vorhergehenden Ansprüche, wobei die Galakturonsäure-Bausteine des isolierten niederveresterten löslichen Pektins teilweise mit Methanol verestert sind.

13. Zusammensetzung gemäß einem der vorhergehenden Ansprüche, wobei das Pektin ein Apfelpektin und/oder Citrusschalenpektin und/oder Rübenschnitzelpektin enthält, bevorzugt besteht das Pektin aus Apfelpektin und/oder Citrusschalenpektin und/oder Rübenschnitzelpektin.

14. Zusammensetzung gemäß einem der vorhergehenden Ansprüche, wobei die Zusammensetzung in Pulverform ist.

15. Verfahren zur Veredelung des Rohmaterials Fleisch, aufweisend die folgenden Schritte:
a.) Vermischen der Zusammensetzung gemäß einem der Ansprüche 1 bis 14 mit einem wässrigen Lösungsmittel und Nitritpökelsalz, und optional mit Phosphat und/oder Citrat, um ein Injektionsmittel zu erhalten;
b.) Injektion des in Schritt a.) erhaltenen Injektionsmittels in das Rohmaterial Fleisch.

16. Verfahren gemäß Anspruch 15, wobei das in Schritt a.) erhaltene Injektionsmittel einen Anteil an der Zusammensetzung von 5 bis 20 Gew.-% aufweist, bevorzugt von 10 bis 15 Gew.-%.

17. Verfahren gemäß einem der Ansprüche 15 oder 16, wobei durch die Injektion in Schritt b.) die Gesamtmasse des Rohmaterials Fleisch um 5 bis 100 % zunimmt, bevorzugt um 10 bis 40 %, bevorzugter um 15 bis 25 %.

18. Verwendung einer Zusammensetzung gemäß einem der Ansprüche 1 bis 14 zur Herstellung einer Kochpökelware.

19. Verwendung gemäß Anspruch 18, wobei die Zusammensetzung in einem Injektionsmittel für das Rohmaterial Fleisch verwendet wird.

20. Kochpökelware enthaltend eine Zusammensetzung gemäß einem der Ansprüche 1 bis 14.

21. Kochpökelware gemäß Anspruch 20, wobei die Kochpökelware ausgewählt ist aus der Gruppe bestehend aus Kochschinken, Vorderkochschinken, Kasseler, Kaiserfleisch, Back- und Geflügelschinken, Pökelzunge, Bratenaufschnitt, gekochter Speck/Bacon, gepökelte Rinderbrust oder gepökeltes Eisbein.

## Claims

1. Composition for producing an injection agent for raw material meat, comprising:
- Isolated low-esterified soluble pectin; and
- plant fibres,
wherein the plant fibre has a water-soluble pectin content of more than 2% by weight and less than 10% by weight;
wherein the composition contains 5 to 50% by weight of isolated low-esterified soluble pectin; and
wherein the composition contains from 0.5 to 20% by weight of plant fibre.

2. Composition according to claim 1, wherein the isolated low-esterified soluble pectin has an esterification degree between 20 and 40 °VE, preferably between 24 and 32 °VE, more preferably the esterification degree is between 25 and 29 °VE.

3. Composition according to claim 1 or 2, wherein the plant fibre is selected from the group consisting of sugar beet fibre, quince fibre, chicory root fibre, carrot fibre, pea fibre, pear fibre, quince fibre, grape fibre, guava fibre, pineapple fibre, apple fibre and citrus fibre, wherein citrus fibre is preferred.

4. Composition according to one of the preceding claims, wherein the composition contains 10 to 30% by weight of isolated low-esterified soluble pectin, preferably 12 to 16% by weight.

5. Composition according to one of the preceding claims, wherein the composition contains 1 to 10% by weight of plant fibres, preferably 1.5 to 5% by weight.

6. Composition according to one of the preceding claims, wherein the composition contains protein.

7. Composition according to claim 6, wherein the composition contains 0.1 to 5 wt% protein, preferably 0.2 to 3.0 wt%, more preferably 0.4 to 1.5 wt%.

8. Composition according to one of claims 6 or 7, wherein the protein is an animal protein, preferably a pig and/or poultry protein, more preferably a hydrolysed pig and/or poultry protein.

9. Composition according to one of the preceding claims, wherein the composition contains phosphate and/or citrate.

10. Composition according to claim 9, wherein the composition contains 1 to 12 wt% phosphate, preferably 2 to 8 wt%, more preferably 4 to 7 wt%.

11. Composition according to one of claims 9 or 10, wherein the composition contains 10 to 35 wt% citrate, preferably 15 to 30 wt%, more preferably 20 to 25 wt%.

12. Composition according to one of the preceding claims, wherein the galacturonic acid building blocks of the isolated low-esterified soluble pectin are partially esterified with methanol.

13. Composition according to one of the preceding claims, wherein the pectin contains apple pectin and/or citrus peel pectin and/or beet pulp pectin, preferably the pectin consists of apple pectin and/or citrus peel pectin and/or beet pulp pectin.

14. Composition according to one of the preceding claims, wherein the composition is in powder form.

15. Method for refining raw meat material, comprising the following steps:
a.) mixing the composition according to one of claims 1 to 14 with an aqueous solvent and nitrite curing salt, and optionally with phosphate and/or citrate, to obtain an injection agent;
b.) injecting the injection agent obtained in step a.) into the raw meat material.

16. Method according to claim 15, wherein the injection agent obtained in step a.) has a proportion of 5 to 20 wt.%, preferably 10 to 15 wt.%, in the composition.

17. Method according to one of claims 15 or 16, wherein the injection in step b) increases the total mass of the raw meat material by 5 to 100%, preferably by 10 to 40%, more preferably by 15 to 25%.

18. Use of a composition according to one of claims 1 to 14 for the production of a cooked cured product.

19. Use according to claim 18, wherein the composition is used in an injection agent for the raw meat material.

20. Cooked cured product containing a composition according to one of claims 1 to 14.

21. Cooked cured meat product according to claim 20, wherein the cooked cured meat product is selected from the group consisting of cooked ham, cooked shoulder ham, smoked pork loin, smoked pork belly, baked ham and poultry ham, cured tongue, roast cold cuts, cooked bacon, cured beef brisket or cured pork knuckle.

## Revendications

1. Composition pour la préparation d'un produit d'injection pour la matière première viande, comprenant:
- de la pectine soluble isolée à faible degré d'estérification; et
- des fibres végétales,
la fibre végétale ayant une teneur en pectine hydrosoluble supérieure à 2 % en poids et inférieure à 10 % en poids;
la composition contenant 5 à 50 % en poids de pectine soluble isolée à faible estérification ; et
la composition contenant 0,5 à 20 % en poids de fibres végétales.

2. Composition selon la revendication 1, dans laquelle la pectine soluble faiblement estérifiée isolée présente un degré d'estérification compris entre 20 et 40 °VE, de préférence entre 24 et 32 °VE, le degré d'estérification étant de préférence compris entre 25 et 29 °VE.

3. Composition selon la revendication 1 ou 2, dans laquelle la fibre végétale est choisie dans le groupe constitué par la fibre de betterave sucrière, fibre de coing, fibre de racine de chicorée, fibre de carotte, fibre de pois, fibre de poire, fibre de coing, fibre de raisin, fibre de goyave, fibre d'ananas, fibre de pomme et fibre d'agrumes, la fibre d'agrumes étant préférée.

4. Composition selon l'une des revendications précédentes, dans laquelle la composition contient 10 à 30 % en poids de pectine soluble isolée à faible degré d'estérification, de préférence 12 à 16 % en poids.

5. Composition selon l'une des revendications précédentes, la composition contenant 1 à 10 % en poids de fibres végétales, de préférence 1,5 à 5 % en poids.

6. Composition selon l'une des revendications précédentes, la composition contenant des protéines.

7. Composition selon la revendication 6, dans laquelle la composition contient 0,1 à 5 % en poids de protéines, de préférence 0,2 à 3,0 % en poids, de préférence 0,4 à 1,5 % en poids.

8. Composition selon l'une des revendications 6 ou 7, dans laquelle la protéine est une protéine animale, de préférence une protéine porcine et/ou avicole, de préférence une protéine porcine et/ou avicole hydrolysée.

9. Composition selon l'une des revendications précédentes, dans laquelle la composition contient du phosphate et/ou du citrate.

10. Composition selon la revendication 9, dans laquelle la composition contient 1 à 12 % en poids de phosphate, de préférence 2 à 8 % en poids, de préférence 4 à 7 % en poids.

11. Composition selon l'une des revendications 9 ou 10, la composition contenant 10 à 35 % en poids de citrate, de préférence 15 à 30 % en poids, de préférence 20 à 25 % en poids.

12. Composition selon l'une des revendications précédentes, dans laquelle les composants d'acide galacturonique de la pectine soluble faiblement estérifiée isolée sont partiellement estérifiés avec du méthanol.

13. Composition selon l'une des revendications précédentes, dans laquelle la pectine contient une pectine de pomme et/ou une pectine d'écorce d'agrumes et/ou une pectine de pulpe de betterave, de préférence la pectine est constituée de pectine de pomme et/ou de pectine d'écorce d'agrumes et/ou de pectine de pulpe de betterave.

14. Composition selon l'une des revendications précédentes, la composition se présentant sous forme de poudre.

15. Procédé d'affinage de la matière première viande, comprenant les étapes suivantes :
a.) mélanger la composition selon l'une des revendications 1 à 14 avec un solvant aqueux et du sel nitrité, et éventuellement avec du phosphate et/ou du citrate, afin d'obtenir un produit d'injection ;
b.) injection de l'agent d'injection obtenu à l'étape a.) dans la matière première viande.

16. Procédé selon la revendication 15, dans lequel l'agent d'injection obtenu à l'étape a.) représente 5 à 20 % en poids de la composition, de préférence 10 à 15 % en poids.

17. Procédé selon l'une des revendications 15 ou 16, dans lequel l'injection à l'étape b) augmente la masse totale de la matière première viande de 5 à 100 %, de préférence de 10 à 40 %, de préférence de 15 à 25 %.

18. Utilisation d'une composition selon l'une des revendications 1 à 14 pour la fabrication d'un produit de salaison cuit.

19. Utilisation selon la revendication 18, dans laquelle la composition est utilisée dans un moyen d'injection pour la matière première viande.

20. Produit de salaison cuit contenant une composition selon l'une des revendications 1 à 14.

21. Produit de salaison cuit selon la revendication 20, le produit de salaison cuit étant choisi dans le groupe constitué par le jambon cuit, le jambon cuit avant, le Kasseler, la viande de porc fumée, le jambon cuit et le jambon de volaille, la langue salée, la charcuterie à rôtir, le lard cuit/bacon, la poitrine de bœuf salée ou le jambonneau salé.
